# EUROPEAN PATENT APPLICATION

(11) **EP 4 838 629 A1**
(43) Date of publication of application: **11.11.2026**
(21) Application number: 25213422.6
(22) Date of filing: 04.11.2025
(51) Int. Cl.: H01M 10/6556, H01M 50/503, H01M 50/51, H01M 50/547, H01M 50/552, H01M 50/569, H01M 50/593

(54) **BATTERY PACK, ENERGY STORAGE APPARATUS, AND POWER-CONSUMING DEVICE**

(30) Priority: 06.05.2025 CN 202510578797
(71) Applicant: Zhejiang Jinko Energy Storage Co., Ltd., Jiaxing, Zhejiang (CN)
(72) Inventor: ZENG, Xianrong, Huangwan Town, Haining City, Jiaxing, Zhejiang (CN); SHI, Yanyan, Huangwan Town, Haining City, Jiaxing, Zhejiang (CN); YANG, Zixiang, Huangwan Town, Haining City, Jiaxing, Zhejiang (CN); ZHANG, Luhua, Huangwan Town, Haining City, Jiaxing, Zhejiang (CN)
(74) Representative: Daub, Thomas

(57) **Abstract**

Battery pack including a signal acquisition unit (3) , a separator (2), and at least two battery cells (1). Each battery cell includes a positive terminal (11) and a negative terminal (12) arranged facing away from each other. The at least two battery cells are electrically connected in series. The positive terminal of one of the battery cells and the negative terminal of the other of the battery cells are electrically connected and facing each other. Housings of the at least two battery cells are separated by the separator. The separator is provided with a through hole (21), an electrical connection structure including the positive terminal and the negative terminal that are electrically connected to each other passes through the through hole. An acquisition portion (31) of the signal acquisition unit is connected to the electrical connection structure.

## Description

### TECHNICAL FIELD

The present disclosure relates to the technical field of energy storage, and in particular, to a battery pack, an energy storage apparatus, and a power-consuming device.

### BACKGROUND

In the related art, a battery pack includes a battery module. The battery module includes a cells contact system (CCS) and a plurality of battery units (also referred to as battery cells). The plurality of battery units are electrically connected through the CCS. However, the CCS has a relatively large volume, and the CCS occupies a relatively large space inside the battery pack, so that a space for placing the battery units inside the battery pack is relatively small. Consequently, energy density of the battery pack is relatively low.

### SUMMARY

Embodiments of the present disclosure provide a battery pack, an energy storage apparatus, and a power-consuming device.

In a first aspect, embodiments of the present disclosure provide a battery pack, including: a signal acquisition unit, a separator, and at least two battery cells. In a same battery cell, the battery cell includes a positive terminal and a negative terminal arranged facing away from each other in a first direction, and the at least two battery cells are distributed along the first direction and are electrically connected in series. In two battery cells electrically connected in series, the positive terminal of one battery cell and the negative terminal of the other battery cell are electrically connected and facing each other. Housings of the at least two battery cells distributed along the first direction are separated by the separator, the separator is provided with a through hole, and an electrical connection structure including the positive terminal and the negative terminal that are electrically connected to each other passes through the through hole. The signal acquisition unit includes an acquisition portion, and the acquisition portion is connected to the electrical connection structure.

As can be seen from the above content of the battery pack according to the present disclosure, in a battery pack box, the electrical connection structure including the positive terminal and the negative terminal does not occupy a space above the battery cell, the acquisition portion of the signal acquisition unit does not occupy the space above the battery cell, either, and there is no need to arrange a wiring harness isolation plate above the battery cell, so that the space above the battery cell can be unoccupied or less occupied. Under a condition that battery pack boxes of a same size specification are used, compared with the related art, in the battery pack of the present disclosure, the space above the battery cell is saved, the battery cell can be designed to have a relatively large dimension in a height direction, the battery cell can be designed to have a relatively large total volume, and the battery cell can store more electrical energy. Therefore, the battery pack according to the present disclosure can have an advantage of relatively high energy density.

In some embodiments, in the electrical connection structure, the positive terminal and the negative terminal are directly electrically connected to each other, at least part of a structure of the positive terminal is located in the through hole, and/or at least part of a structure of the negative terminal is located in the through hole.

In some embodiments, in the electrical connection structure, at least one of the positive terminal and the negative terminal is provided with an accommodating notch, the acquisition portion is located in the accommodating notch, and the acquisition portion is clamped by the positive terminal and the negative terminal.

In some embodiments, the negative terminal is provided with the accommodating notch, and the accommodating notch is recessed from an end face of the negative terminal and extends to a side face of the negative terminal.

In some embodiments, the positive terminal is provided with the accommodating notch, and the accommodating notch is recessed from an end face of the positive terminal and extends to a side face of the positive terminal.

In some embodiments, the electrical connection structure further includes a conductive intermediate member, and at least part of a structure of the conductive intermediate member is located in the through hole, in the electrical connection structure, and the positive terminal is indirectly electrically connected to the negative terminal through the conductive intermediate member; and the signal acquisition unit includes at least two acquisition portions, and the at least two acquisition portions are connected to the conductive intermediate member.

In some embodiments, the conductive intermediate member is further connected to the separator.

In some embodiments, in the electrical connection structure, the conductive intermediate member is located in the through hole, at least part of a structure of the positive terminal is located in the through hole, a projection of the positive terminal along the first direction onto a plane where the separator is located has a range α, a projection of the conductive intermediate member along the first direction onto the plane where the separator is located has a range γ, and the range α at least partially overlaps with the range γ.

In some embodiments, in the electrical connection structure, the conductive intermediate member is located in the through hole, at least part of a structure of the negative terminal is located in the through hole, a projection of the negative terminal along the first direction onto a plane where the separator is located has a range β, a projection of the conductive intermediate member along the first direction onto the plane where the separator is located has a range γ, and the range β at least partially overlaps with the range γ.

In some embodiments, at least part of a structure of the acquisition portion extends into the through hole along a direction intersecting with the first direction.

In some embodiments, the signal acquisition unit further includes a wiring harness, the wiring harness is connected to the acquisition portion, the separator is provided with a penetration notch, the penetration notch is in communication with the through hole, and the wiring harness extends from the through hole, through the penetration notch, to the outside of the separator.

In some embodiments, the signal acquisition unit further includes a wiring harness, the wiring harness is connected to the acquisition portion, a wiring harness hole is embedded in the separator, the wiring harness hole is in communication with the through hole, and the wiring harness extends from the through hole, through the wiring harness hole, to the outside of the separator.

In some embodiments, the signal acquisition unit further includes a wiring harness, the wiring harness is connected to the acquisition portion, a wiring harness groove is recessed in the separator, the wiring harness groove is in communication with the through hole, and the wiring harness extends from the through hole, through the wiring harness groove, to the outside of the separator.

In some embodiments, in the same battery cell, the battery cell includes two first side structural walls arranged facing away from each other in the first direction and two second side structural walls arranged facing away from each other in a second direction, and the second direction intersecting with the first direction; either of the first side structural walls has an area larger than either of the second side structural walls; and the positive terminal is arranged on one of the first side structural walls, and the negative terminal is arranged on the other of the first side structural walls.

In some embodiments, in the same battery cell, a projection of the positive terminal onto the first side structural wall along the first direction has a first range, a projection of the negative terminal onto the first side structural wall along the first direction has a second range, and the first range does not overlap with the second range.

In some embodiments, the battery cell further includes a pressure relief valve, and in the same battery cell, the positive terminal, the negative terminal, and the pressure relief valve are located on different structural walls of the battery cell.

In some embodiments, a material of the separator includes an electrical insulating material and/or a thermal insulating material.

In some embodiments, the separator is provided with a flow channel for flow of coolant.

In a second aspect, embodiments of the present disclosure provide an energy storage apparatus, where the energy storage apparatus includes the battery pack as described above. Due to the relatively high energy density of the battery pack, the energy storage apparatus consequently also has relatively high energy density.

In a third aspect, embodiments of the present disclosure provides a power-consuming device, where the power-consuming device includes the energy storage apparatus as described above. The power-consuming device may be an electric vehicle, a power grid, a household appliance, or the like.

It should be understood that the general description above and the detailed description in the following are merely exemplary and illustrative, and cannot limit the present disclosure.

### BRIEF DESCRIPTION OF DRAWINGS

In order to more clearly illustrate the technical solutions in embodiments of the present disclosure, the accompanying drawings used in the description of the embodiments will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic diagram of an assembly structure of a battery unit, a wiring harness isolation plate, a busbar, and a signal acquisition line included in a battery pack in the related art;
FIG. 2 is a three-dimensional view of a battery cell according to some embodiments of the present disclosure;
FIG. 3 is a three-dimensional view of a battery cell in FIG. 2 from another three-dimensional perspective;
FIG. 4 is a side view of a battery cell in FIG. 2 from a side perspective;
FIG. 5 is a schematic diagram of a structure in which four battery cells are electrically connected in series according to some embodiments;
FIG. 6 is a schematic diagram of alternating arrangement of four battery cells and three separators according to some embodiments;
FIG. 7 is a schematic diagram of a cross-sectional structure of a first battery cell, a second battery cell, and a separator;
FIG. 8 is a partial schematic enlarged view of Part A in FIG. 7;
FIG. 9 is a schematic diagram of an assembly structure of a negative terminal and a terminal mounting ring from a three-dimensional perspective;
FIG. 10 is a schematic diagram of a cross-sectional structure of the second battery cell, a third battery cell, and the separator;
FIG. 11 is a partial schematic enlarged view of Part B in FIG. 10;
FIG. 12 is a schematic diagram of a cross-sectional structure of a positive terminal and the terminal mounting ring from a three-dimensional perspective;
FIG. 13 is a schematic diagram of an alternative structure to the structure in FIG. 11;
FIG. 14 is a schematic diagram of a partial assembly structure of a separator, a signal acquisition unit, and a negative terminal;
FIG. 15 is a schematic diagram of a partial assembly structure of a separator, a signal acquisition unit, and a negative terminal from a cross-sectional perspective;
FIG. 16 is another schematic diagram of a cross-sectional structure of a first battery cell, a second battery cell, and a separator according to some embodiments;
FIG. 17 is a partial schematic enlarged view of Part C in FIG. 16;
FIG. 18 is a schematic diagram of a partial assembly structure of a separator, a signal acquisition unit, and a conductive intermediate member;
FIG. 19 is a schematic diagram of a partial assembly structure of a separator and a signal acquisition unit from a cross-sectional perspective;
FIG. 20 is a schematic diagram of distribution of a projection of the positive terminal and the negative terminal onto a first side structural wall;
FIG. 21 is a schematic diagram of a position of a portion of a wiring harness located outside a separator relative to the separator;
FIG. 22 is a schematic structural diagram of two columns of battery cells from a three-dimensional perspective;
FIG. 23 is another schematic structural diagram of a separator according to some embodiments;
FIG. 24 is another schematic structural diagram of a signal acquisition unit according to some embodiments;
FIG. 25 is another schematic structural diagram of a signal acquisition unit according to some embodiments;
FIG. 26 is a schematic diagram showing that a plurality of battery cells electrically connected in series are arranged along a horizontal direction in a battery pack box; and
FIG. 27 is a schematic diagram showing that a plurality of battery cells electrically connected in series are arranged along a height direction in a battery pack box.

Reference signs: 10: battery unit; 10a: terminal; 20: busbar; 30: wiring harness isolation plate; 40: signal acquisition line; 1: battery cell; 101: first column of battery cells; 102: second column of battery cells; 1a: first battery cell; 1b: second battery cell; 1c: third battery cell; 1d: fourth battery cell; 11: positive terminal; 111: positive-terminal accommodating notch; 112: positive-terminal end face; 113: positive terminal side face; TY1: first range; 12: negative terminal; 121: negative-terminal accommodating notch; 122: negative-terminal end face; 123: negative terminal side face; TY2: second range; 13: housing; 131: top structural wall; 132: bottom structural wall; 133: side structural wall; 1331: first side structural wall; 1332: second side structural wall; 14: terminal mounting ring; 2: separator; 2a: first separation portion; 2b: second separation portion; 21: through hole; 22: penetration notch; 23: wiring harness hole; 3: signal acquisition unit; 3a: first group of signal acquisition units; 3b: second group of signal acquisition units; 31: acquisition portion; 32: wiring harness; 321: main wiring harness; 322: branch wiring harness; 4: conductive intermediate member; DL: electrical connection structure; 50: box.

### DESCRIPTION OF EMBODIMENTS

In order to better understand the technical solutions of the present disclosure, embodiments of the present disclosure are described in detail below with reference to the accompanying drawings. It should be clear that the described embodiments are only part of rather than all of the embodiments of the present disclosure. Based on the embodiments in the present disclosure, all other embodiments obtained by those of ordinary skill in the art without creative efforts shall fall within the protection scope of the present disclosure. The terms used in the embodiments of the present disclosure are only for the purpose of describing specific embodiments and are not intended to limit the present disclosure. As used in the embodiments of the present disclosure and the appended claims, the singular forms of "a/an", "said", and "the" are also intended to include plural forms, unless other meanings are clearly indicated in the context. It should be understood that the term "and/or" herein is merely an association relationship describing associated objects, indicating that three relationships may exist. For example, A and/or B may indicate that there are three cases of A alone, A and B together, and B alone. In addition, the character "/" herein generally means that the associated objects are in an "or" relationship.

In the drawings herein, a direction X, a direction Y, and a direction Z are perpendicular to one another, where the direction Z may represent a direction from a top structural wall of a battery cell to a bottom structural wall of the battery cell.

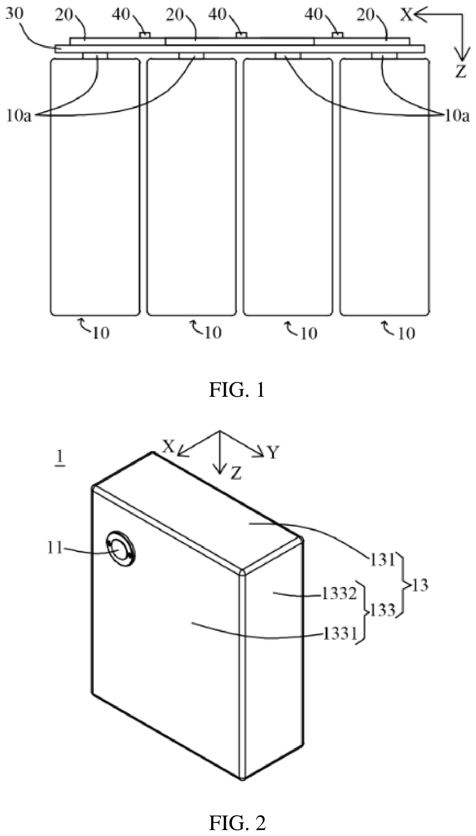

Referring to FIG. 1, in the related art, a plurality of battery units 10 are arranged along the direction X. Each battery unit 10 includes a terminal 10a (e.g., a positive terminal and a negative terminal) located atop it. A CCS is further arranged above the battery units 10. The CCS is also referred to as a wiring harness integrated member or a busbar assembly. The CCS includes busbars 20, a wiring harness isolation plate 30, and signal acquisition lines 40. The battery unit 10 is located below the wiring harness isolation plate 30. The busbar 20 is mounted above the wiring harness isolation plate 30. The busbar 20 is welded and electrically connected to the terminal 10a. For example, the positive terminal of a first battery unit 10 may be electrically connected to the negative terminal of a second battery unit 10 through a first busbar 20, the positive terminal of a second battery unit 10 may be electrically connected to the negative terminal of a third battery unit 10 through a second busbar 20, and so on. The plurality of battery units 10 may be electrically connected in series through the busbars 20. The signal acquisition line 40 is also mounted above the wiring harness isolation plate 30, and an acquisition portion of the signal acquisition line 40 is arranged on the busbar 20. The signal acquisition line 40 may be configured to acquire signals such as a temperature signal, a voltage signal, and a current signal.

In the related art, in the battery pack, since the CCS has a certain volume, the CCS occupies more space above the battery unit, which limits a total volume of all battery units that can be placed in the battery pack. Therefore, energy density of the battery pack in the related art is relatively low.

With respect to the above technical problems, the present disclosure provides some embodiments of the battery pack. The battery pack includes a signal acquisition unit, a separator, and at least two battery cells.

Referring to FIG. 2 to FIG. 4, in a same battery cell 1, the battery cell 1 includes a positive terminal 11 and a negative terminal 12 arranged facing away from each other in a first direction. The first direction is parallel to the direction X, and the first direction described in the subsequent content herein is also parallel to the direction X.

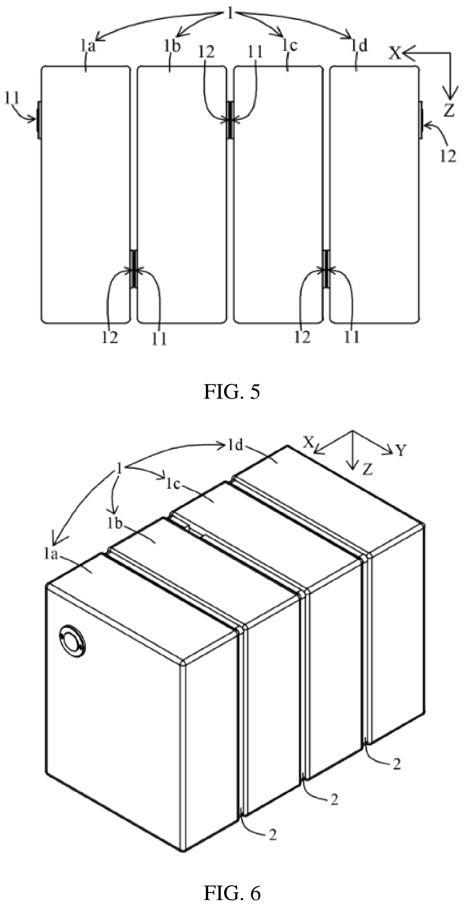

Referring to FIG. 5, the at least two battery cells 1 are distributed along the first direction and are electrically connected in series. In the two battery cells 1 electrically connected in series, the positive terminal 11 of one battery cell 1 and the negative terminal of the other battery cell 1 may be electrically connected and facing each other.

Referring to FIG. 5, the battery pack may include a first battery cell 1a, a second battery cell 1b, a third battery cell 1c, and a fourth battery cell 1d. The negative terminal 12 of the first battery cell 1a and the positive terminal 11 of the second battery cell 1b may be electrically connected and facing each other, the negative terminal 12 of the second battery cell 1b and the positive terminal 11 of the third battery cell 1c may be electrically connected and facing each other, and the negative terminal 12 of the third battery cell 1c and the positive terminal 11 of the fourth battery cell 1d may be electrically connected and facing each other.

In some embodiments, the battery pack may alternatively include other numbers of battery cells electrically connected in series.

Referring to FIG. 6, housings of at least two battery cells 1 distributed along the first direction are separated by separators 2.

Referring to FIG. 6, the battery pack may include the first battery cell 1a, the second battery cell 1b, the third battery cell 1c, the fourth battery cell 1d, and three separators 2. The housing of the first battery cell 1a and the housing of the second battery cell 1b are separated by a separator 2, the housing of the second battery cell 1b and the housing of the third battery cell 1c are separated by a separator 2, and the housing of the third battery cell 1c and the housing of the fourth battery cell 1d are separated by a separator 2.

In some embodiments, the battery pack may alternatively include other numbers of battery cells and other numbers of separators.

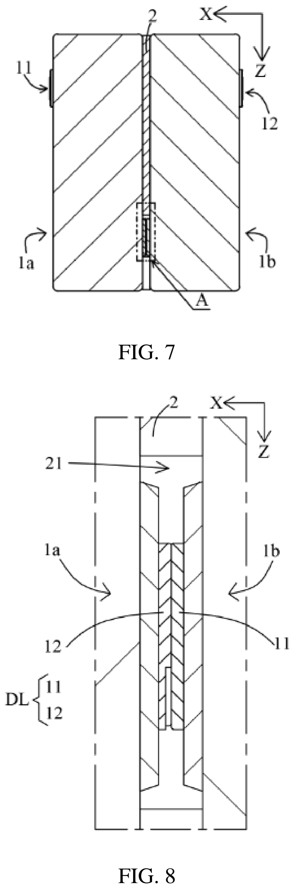

In some embodiments, the separator may be provided with a through hole, the through hole may penetrate the separator along the first direction, and an electrical connection structure including the positive terminal and the negative terminal that are electrically connected to each other may pass through the through hole. Referring to FIG. 7, by taking the first battery cell 1a and the second battery cell 1b adjacent to each other as an example, the separator 2 is arranged between the first battery cell 1a and the second battery cell 1b. Referring to FIG. 8, the separator 2 is provided with a through hole 21, and an electrical connection structure DL including the positive terminal 11 and the negative terminal 12 that are electrically connected to each other passes through the through hole 21.

In some embodiments, the signal acquisition unit includes an acquisition portion, the acquisition portion is connected to the electrical connection structure DL, and the acquisition portion may be configured to acquire a temperature signal, a current signal, and a voltage signal of the electrical connection structure DL.

As can be seen from the above content of the battery pack provided in some embodiments of the present disclosure, in a battery pack box, the electrical connection structure including the positive terminal and the negative terminal does not occupy a space above the battery cell, the acquisition portion of the signal acquisition unit does not occupy the space above the battery cell, either, and there is no need to arrange a wiring harness isolation plate above the battery cell, so that the space above the battery cell can be unoccupied or less occupied. Under a condition that battery pack boxes of a same size specification are used, compared with the related art in which the space above the battery cell is occupied by non-battery structural members, which limits a total volume of the battery cells, in some embodiments of the present disclosure, the space above the battery cell is saved, the battery cell can be designed to have a relatively large dimension in a height direction, the battery cell can be designed to have a relatively large total volume, and the battery cell can store more electrical energy. Therefore, the battery pack provided in some embodiments of the present disclosure can have an advantage of relatively high energy density.

Generally, a spacing is required between two adjacent battery cells. The spacing may have the following effects: the spacing may have an effect of insulation to reduce a possibility of electrical breakdown between the housings of the two adjacent battery cells. The spacing may also have an effect of thermal insulation to reduce a possibility of direct heat conduction between the housings of the two adjacent battery cells. Since the battery cell may expand after being charged, the spacing may also provide a deformation space for the battery cell.

In some embodiments of the present disclosure, the spacing between the two adjacent battery cells is further used to place the electrical connection structure including the positive terminal and the negative terminal. The electrical connection structure in the spacing may not increase an occupied size along the first direction, thereby saving the space above the battery cell, or even though the electrical connection structure located in the spacing may increase the occupied size along the first direction, a volume of the increased occupied space in the first direction is less than that of the saved space above the battery cell. Therefore, the battery pack provided in some embodiments of the present disclosure can still have the advantage of relatively high energy density.

In some embodiments of the present disclosure, the spacing between the two adjacent battery cells may alternatively be configured to place the separator. However, the separator is provided with the through hole, and the through hole is penetrated by the electrical connection structure including the positive terminal and the negative terminal. Therefore, the arrangement has an advantage of a more compact structure, so that the battery cell may be designed with a relatively larger volume, and the battery pack has relatively high energy density.

In some embodiments of the present disclosure, the separator 2 may be made of an electrical insulating material. The separator 2 may have an effect of insulation between the housings of the two adjacent battery cells, thereby reducing a possibility of electrical breakdown between the housings of the two adjacent battery cells.

In some embodiments of the present disclosure, the separator 2 may be made of a thermal insulating material, to reduce a possibility of direct heat conduction between the housings of the two adjacent battery cells, thereby reducing a possibility of explosion of the battery cells.

In some embodiments of the present disclosure, the separator 2 may be provided with a flow channel for flow of coolant (not shown). The coolant may flow along the flow channel and absorb heat of parts between the housings of the two adjacent battery cells facing each other, so as to improve heat dissipation efficiency of the parts between the housings of the two adjacent battery cells facing each other.

The flow channel may be recessed in the separator 2, or the flow channel may be embedded in the separator 2.

In some embodiments, referring to FIG. 8, in the electrical connection structure DL, the positive terminal 11 and the negative terminal 12 may be directly electrically connected, and both the positive terminal 11 and the negative terminal 12 are located in the through hole 21. The arrangement may result in a more compact structure between the electrical connection structure DL and the separator 2, which occupies less space in the battery pack box.

The arrangement that the positive terminal 11 and the negative terminal 12 are directly electrically connected also results in relatively low electrical resistance between the positive terminal 11 and the negative terminal 12. During current conduction, heat generated between the positive terminal 11 and the negative terminal 12 is relatively small, that is, there are advantages of high current transmission efficiency and low energy loss.

In some embodiments (not shown), one part of a structure of the positive terminal may be located in the through hole, and the other part of the structure of the positive terminal may be located outside the through hole.

In some embodiments (not shown), one part of a structure of the negative terminal may be located in the through hole, and the other part of the structure of the negative terminal may be located outside the through hole.

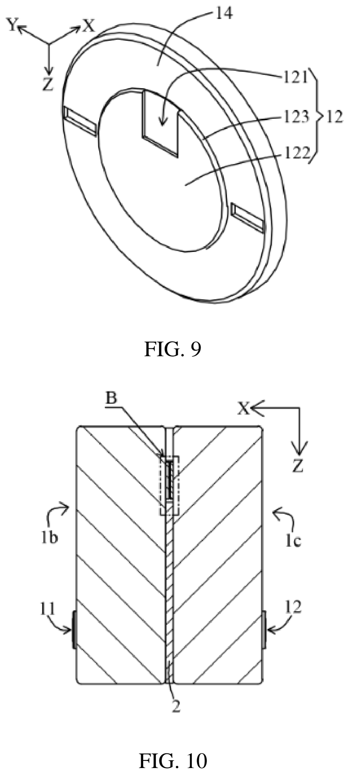

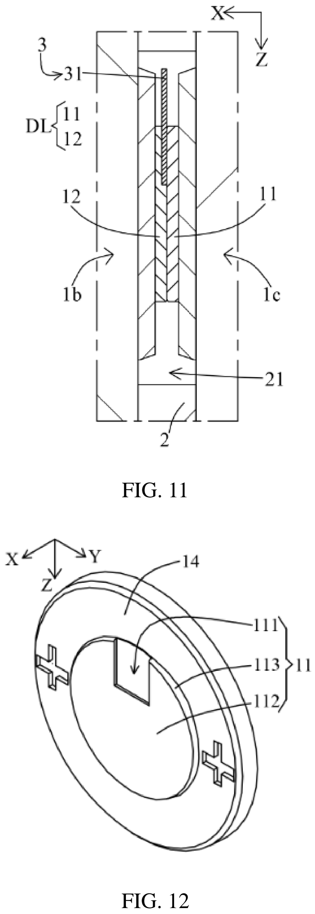

In some embodiments, in a same electrical connection structure, referring to FIG. 9, the negative terminal 12 may be provided with a negative-terminal accommodating notch 121, at least part of a structure of the acquisition portion (not shown) may be located in the negative-terminal accommodating notch 121, and the acquisition portion may be clamped by the positive terminal (not shown) and the negative terminal 12 in the same electrical connection structure. As can be seen from the above, the arrangement results in an advantage of a more compact structure, which occupies less space in the battery pack box. Referring to FIG. 10, the second battery cell 1b and the third battery cell 1c adjacent to each other are taken as an example. Referring to FIG. 11, the acquisition portion 31 is clamped between the negative terminal 12 of the second battery cell 1b and the positive terminal 11 of the third battery cell 1c, and at least part of the structure of the acquisition portion 31 may be located in the negative-terminal accommodating notch of the negative terminal 12.

Referring to FIG. 9, when the negative terminal 12 is provided with the negative-terminal accommodating notch 121, the negative-terminal accommodating notch 121 is recessed from a negative-terminal end face 122 of the negative terminal 12 and extends to a negative-terminal side face 123 of the negative terminal 12. The arrangement facilitates the acquisition portion 31 to be inserted into or removed from the negative-terminal accommodating notch 121 along a direction perpendicular to the first direction. During maintenance, there is no need to disassemble the two electrically connected battery cells, thereby resulting in relatively low maintenance workload.

The negative-terminal end face 122 may be parallel to the direction Y and the direction Z, and the negative-terminal end face 122 may be perpendicular to the direction X. The negative-terminal side face 123 may intersect with the direction Y and the direction Z, and the negative-terminal side face 123 may be parallel to the direction X.

In addition, the negative-terminal end face 122 is configured to abut against and be electrically connected to a positive-terminal end face of the positive terminal.

In some embodiments (not shown), the negative-terminal accommodating notch may be recessed only from the negative-terminal side face of the negative terminal.

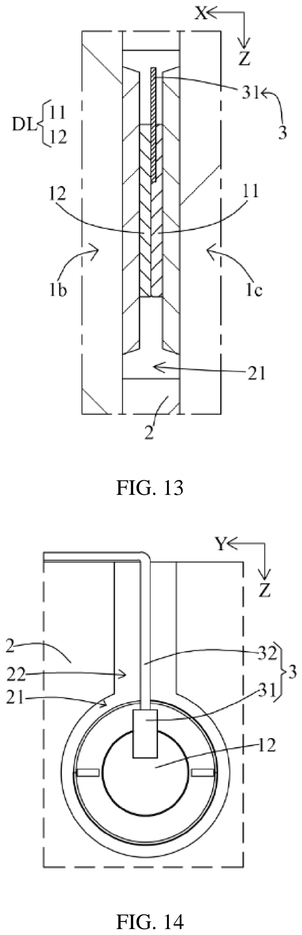

In some embodiments, in the same electrical connection structure, referring to FIG. 12, the positive terminal 11 may be provided with a positive-terminal accommodating notch 111, and at least part of the structure of the acquisition portion (not shown) may be located in the positive-terminal accommodating notch 111. Referring to FIG. 13, the acquisition portion 13 located in the positive-terminal accommodating notch (not shown) may be clamped by the positive terminal 11 and the negative terminal 12 on two sides.

Referring to FIG. 12, when the positive terminal 11 is provided with the positive-terminal accommodating notch 111, the positive-terminal accommodating notch 111 is recessed from a positive-terminal end face 112 of the positive terminal 11 and extends to a positive-terminal side face 113 of the positive terminal 11. The arrangement facilitates the acquisition portion 31 to be inserted into or removed from the positive-terminal accommodating notch 111 along a direction perpendicular to the first direction. During maintenance, there is no need to disassemble the two electrically connected battery cells, thereby resulting in relatively low maintenance workload.

The positive-terminal end face 112 may be parallel to the direction Y and the direction Z, and the positive-terminal end face 112 may be perpendicular to the direction X. The positive-terminal side face 113 may intersect with the direction Y and the direction Z, and the positive-terminal side face 113 may be parallel to the direction X.

In addition, the positive-terminal end face 112 is configured to abut against and be electrically connected to the negative-terminal end face of the negative terminal.

In some embodiments (not shown), the positive-terminal accommodating notch may be recessed only from the positive-terminal side face of the positive terminal.

In some embodiments (not shown), in the same electrical connection structure, the negative terminal is provided with a negative-terminal accommodating notch, the positive terminal is also provided with a positive-terminal accommodating notch, one part of the structure of the acquisition portion may be located in the negative-terminal accommodating notch, the other part of the structure of the acquisition portion may be located in the positive-terminal accommodating notch, and the acquisition portion is clamped by the positive terminal and the negative terminal on two sides.

In some embodiments, since the acquisition portion is clamped by the positive terminal and the negative terminal on two sides, the positive terminal and the negative terminal apply a clamping force to the two sides of the acquisition portion. Even if the acquisition portion has a tendency of movement relative to the positive terminal and the negative terminal, a static friction force between the acquisition portion and the positive terminal and a static friction force between the acquisition portion and the negative terminal may also restrict detachment of the acquisition portion from the positive terminal and the negative terminal. Therefore, the connection between the acquisition portion and the positive terminal and the connection between the acquisition portion and the negative terminal may not be achieved by welding. As welding is not used, it is convenient for quick disassembly and assembly during maintenance.

In some embodiments, a surface of the acquisition portion may include a frosted surface to enhance the static friction force between the acquisition portion and the positive terminal and the static friction force between the acquisition portion and the negative terminal.

In some embodiments, the connection between the acquisition portion and the positive terminal, the connection between the acquisition portion and the negative terminal, and the connection between the positive terminal and the negative terminal may alternatively be achieved by conductive adhesive bonding, to further improve connection reliability and also further improve conductivity between the positive terminal and the negative terminal.

In some embodiments, the connection between the acquisition portion and the positive terminal and the connection between the acquisition portion and the negative terminal may alternatively be achieved by welding.

In some embodiments (not shown), the acquisition portion may not be clamped by the positive terminal and the negative terminal. For example, the structure of the acquisition portion includes an annular structure, the annular structure is provided with a through hole, the through hole may be penetrated by the positive terminal or the negative terminal, and the acquisition portion may be connected to the positive-terminal side face of the positive terminal or the negative-terminal side face of the negative terminal. Further, the acquisition portion may be bonded to the positive-terminal side face or the negative-terminal side face by using a conductive adhesive.

In some embodiments (not shown), the acquisition portion may not be clamped by the positive terminal and the negative terminal. For example, the structure of the acquisition portion includes a sheet structure, and the sheet structure may be attached to the positive-terminal side face of the positive terminal or the negative-terminal side face of the negative terminal. Further, the acquisition portion may be bonded to the positive-terminal side face or the negative-terminal side face by using a conductive adhesive.

In some embodiments, referring to FIG. 9, the battery cell may include a terminal mounting ring 14, the housing of the battery cell is provided with a mounting hole (not shown), the terminal mounting ring 14 is mounted in the mounting hole, the terminal mounting ring 14 is provided with a through hole (not shown), the negative terminal 12 passes through the through hole of the terminal mounting ring 14, the terminal mounting ring 14 surrounds the negative terminal 12, and the negative terminal 12 is fixed to the housing of the battery cell through the terminal mounting ring 14. The terminal mounting ring 14 also has insulation properties to prevent electrical conduction between the housing of the battery cell and the negative terminal 12. Similarly, referring to FIG. 12, the positive terminal 11 may also be fixed to the housing of the battery cell through the corresponding terminal mounting ring 14.

As can be seen from the above content, at least part of the structure of the acquisition portion may extend into the through hole in a direction intersecting with the first direction. With the arrangement, an advantage of a more compact structure may be achieved. In the following content herein, the description is mainly based on an example of "an overall structure of the acquisition portion may be located in the through hole".

In some embodiments, referring to FIG. 14, the signal acquisition unit 3 further includes a wiring harness 32, the wiring harness 32 is connected to the acquisition portion 31, and a signal acquired by the acquisition portion 31 may be transmitted to a battery manager unit (BMU) through the wiring harness 32.

Referring to FIG. 14, the separator 2 may be provided with a penetration notch 22, the penetration notch 22 is in communication with the through hole 21, and the wiring harness 32 may extend from the through hole 21, through the penetration notch 22, to the outside of the separator 2, thereby enabling the wiring harness 32 to be connected to the BMU. With the arrangement, a structure between the signal acquisition unit 3 and the separator 2 is more compact.

An extension direction of the penetration notch 22 may be perpendicular to the first direction. For example, the extension direction of the penetration notch 22 may be the direction Z or the direction Y.

In addition, a width of the penetration notch 22 may be equal to an outer diameter dimension of the wiring harness 32, so that a side wall of the penetration notch 22 can limit the wiring harness 32. Alternatively, the width of the penetration notch 22 may be smaller than the outer diameter dimension of the wiring harness 32 by 0.1 mm to 1 mm, so that the side wall of the penetration notch 22 can have a clamping effect on the wiring harness 32, thereby achieving a better limiting effect. Alternatively, the width of the penetration notch 22 may be larger than the outer diameter dimension of the wiring harness 32 by 0.1 mm to 1 mm, which may also cause the side wall of the penetration notch 22 to have a limiting effect on the wiring harness 32. Certainly, the wiring harness 32 may alternatively be limited by the housings of the battery cells on two sides.

Moreover, the side wall of the penetration notch 22 may be bonded to the wiring harness 32, so that the wiring harness 32 is reliably limited in the penetration notch 22, reducing a possibility of transmission of external vibration through the wiring harness 32 to the acquisition portion 31, thereby enabling the acquisition portion 31 to be reliably connected to the electrical connection structure including the positive terminal and the negative terminal.

In addition, the side wall of the penetration notch 22 may be provided with a buckle (not shown), the buckle includes an L-shaped structure, a C-shaped structure, or a U-shaped structure, and the wiring harness 32 may be snapped into the buckle, which can reduce the possibility of transmission of external vibration through the wiring harness 32 to the acquisition portion 31, thereby enabling the acquisition portion 31 to be reliably connected to the electrical connection structure including the positive terminal and the negative terminal.

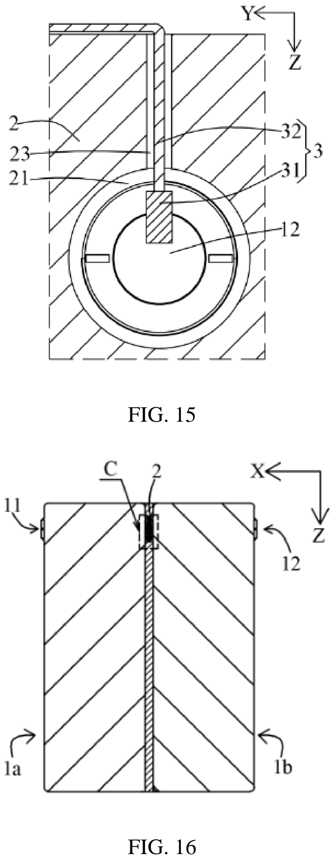

In some embodiments, referring to FIG. 15, a wiring harness hole 23 may be provided in the separator 2, the wiring harness hole 23 is in communication with the through hole 21, and the wiring harness 32 may extend from the through hole 21, through the wiring harness hole 23, to the outside of the separator 2, so that the wiring harness 32 is connected to the BMU. With the arrangement, a structure between the signal acquisition unit 3 and the separator 2 is more compact.

An extension direction of the wiring harness hole 23 may be perpendicular to the first direction. For example, the extension direction of the wiring harness hole 23 may be the direction Z or the direction Y.

In addition, the wiring harness hole 23 may have a good limiting effect on the wiring harness 32, reducing the possibility of transmission of external vibration through the wiring harness 32 to the acquisition portion 31, thereby enabling the acquisition portion 31 to be reliably connected to the electrical connection structure including the positive terminal and the negative terminal.

In some embodiments (not shown), a wiring harness groove may be recessed in the separator, the wiring harness groove is in communication with the through hole, and the wiring harness may extend from the through hole, through the wiring harness groove, to the outside of the separator.

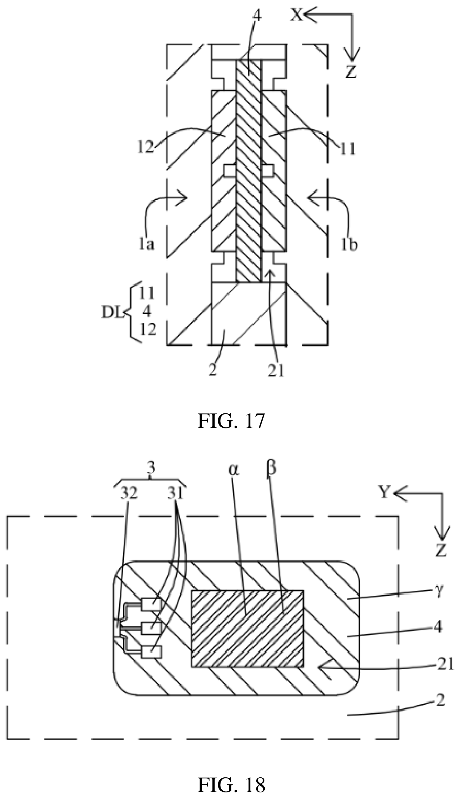

In some embodiments, in the same electrical connection structure, the positive terminal and the negative terminal may not be directly electrically connected. By taking the first battery cell 1a and the second battery cell 1b adjacent to each other shown in FIG. 16 as an example, referring to FIG. 17, the electrical connection structure DL may further include a conductive intermediate member 4, at least part of a structure of the conductive intermediate member 4 is located in the through hole 21, and the positive terminal 11 is indirectly electrically connected to the negative terminal 12 through the conductive intermediate member 4. Referring to FIG. 18, a same signal acquisition unit 3 may include at least two acquisition portions 31, and the at least two acquisition portions 31 are connected to the conductive intermediate member 4. With the arrangement, the conductive intermediate member 4 may provide a mounting part with a relatively large area, so that the at least two acquisition portions 31 can simultaneously acquire a signal of the electrical connection structure DL.

Referring to FIG. 18, the signal acquisition unit 3 may include three acquisition portions 31. One acquisition portion 31 may acquire a temperature signal, another acquisition portion 31 may acquire a current signal, and yet another acquisition portion 31 may acquire a voltage signal.

The acquisition portion 31 and the conductive intermediate member 4 may be welded or bonded by using a conductive adhesive.

Referring to FIG. 18, a projection of the positive terminal (not shown) on one side of the conductive intermediate member 4 along the first direction onto a plane where the separator 2 is located may have a range α, a projection of the conductive intermediate member 4 along the first direction onto the plane where the separator 2 is located may have a range γ, and the range α and the range γ may at least partially overlap. Referring to FIG. 18, a projection of the negative terminal (not shown) on the other side of the conductive intermediate member 4 along the first direction onto a plane where the separator 2 is located may have a range β, a projection of the conductive intermediate member 4 along the first direction onto the plane where the separator 2 is located may have a range γ, and the range β and the range γ may at least partially overlap. It is to be noted that the plane where the separator 2 is located refers to an infinitely extendable surface that is on the separator 2 and is parallel to the direction Y and the direction Z.

The positive terminal and the conductive intermediate member may abut against each other, be welded to each other, or be bonded by using a conductive adhesive. Similarly, the negative terminal and the conductive intermediate member may abut against each other, be welded to each other, or be bonded by using a conductive adhesive.

In some embodiments, referring to FIG. 17 to FIG. 18, peripheral edges of the conductive intermediate member 4 may be fixedly connected to a hole wall of the through hole 21 (for example, by interference fit or bonding), so that the conductive intermediate member 4 is fixed relative to the separator 2.

In some embodiments (not shown), the peripheral edges of the conductive intermediate member 4 may be embedded into the separator.

In some embodiments, the conductive intermediate member and the separator may not be connected, and the conductive intermediate member may be clamped and fixed by the positive terminal and the negative terminal on two sides.

In some embodiments, referring to FIG. 17, the conductive intermediate member 4 may not completely occupy all the space of the through hole 21. In addition to the conductive intermediate member 4 being located in the through hole 21, at least part of the structure of the positive terminal may be located in the through hole 21, and at least part of the structure of the negative terminal may also be located in the through hole 21.

In some embodiments (not shown), the conductive intermediate member may be located in the through hole, while at least one of the positive terminal and the negative terminal may not be located in the through hole.

In some embodiments, the conductive intermediate member 4 may include a sheet structure, and the conductive intermediate member 4 may be made of a conductive metal, for example, at least one of silver, copper, and aluminum.

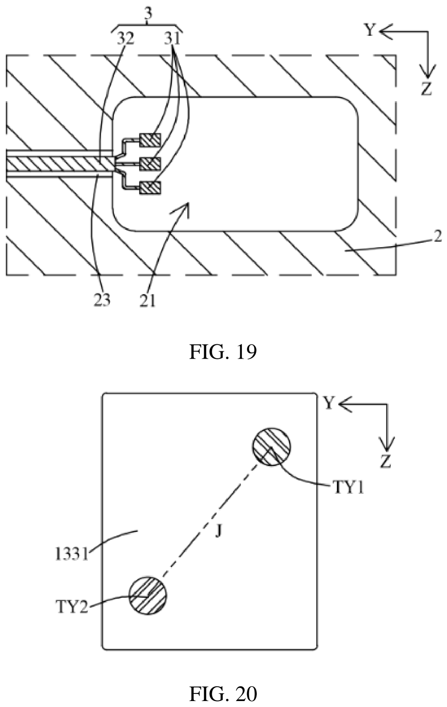

In some embodiments, referring to FIG. 19, at least part of the structure of the acquisition portion 31 may extend into the through hole 21 along a direction intersecting with the first direction.

In some embodiments (not shown), alternatively, the acquisition portion may not be located in the through hole. For example, a partial structure of the electrical connection structure passing through the through hole may be located outside the through hole, and the acquisition portion may be connected to a portion that is in the electrical connection structure and is located outside the through hole.

In some embodiments, referring to FIG. 19, the separator 2 may be provided with a wiring harness hole 23, the wiring harness hole 23 is in communication with the through hole 21, and the wiring harness 32 of the signal acquisition unit 3 may extend from the through hole 21, through the wiring harness hole 23, to the outside of the separator 2.

In some embodiments, referring to FIG. 2 to FIG. 3, in the same battery cell 1, both the positive terminal 11 and the negative terminal 12 may be arranged on a side structural wall 133 of the housing 13 of the battery cell 1, instead of on a top structural wall 131 of the housing 13 of the battery cell 1, while a pressure relief valve (not shown) of the battery cell 1 may be arranged on the top structural wall 131. When internal pressure of the battery cell increases and the pressure relief valve ejects gas or even electrolyte, the ejected gas or electrolyte is not likely to damage the positive terminal or the negative terminal of an adjacent battery cell. If the positive terminal or the negative terminal is located in the through hole of the separator, the separator may have a protection effect, and then the ejected gas or electrolyte is even less likely to damage the positive terminal or the negative terminal of the adjacent battery cell.

In some embodiments, the pressure relief valve may alternatively be located on a bottom structural wall 132 of the housing 13 of the battery cell 1, as long as a space for the pressure relief valve to eject gas or electrolyte is reserved below the bottom structural wall 132 in the battery pack.

In some embodiments, referring to FIG. 2 to FIG. 3, the side structural wall 133 of the housing 13 of the battery cell 1 may include two first side structural walls 1331 arranged facing away from each other in the first direction (e.g., a direction parallel to the direction X) and two second side structural walls 1332 arranged facing away from each other in a second direction (e.g., a direction parallel to the direction Y). The positive terminal 11 is arranged on one first side structural wall 1331, the negative terminal 12 is arranged on the other first side structural wall 1331, and the pressure relief valve (not shown) may be arranged on either of the second side structural walls 1332.

In summary, it is sufficient that the positive terminal, the negative terminal, and the pressure relief valve are located on different structural walls of the battery cell.

In some embodiments, referring to FIG. 2 to FIG. 3, in the same battery cell 1, the battery cell 1 includes two first side structural walls 1331 arranged facing away from each other in the first direction (e.g., a direction parallel to the direction X) and two second side structural walls 1332 arranged facing away from each other in the second direction (e.g., a direction parallel to the direction Y). The first direction and the second direction may be perpendicular to each other, and an area of either of the first side structural walls 1331 is larger than that of either of the second side structural walls 1332.

In some embodiments, the first direction (parallel to the direction X) and the second direction (not parallel to the direction Y) may not be perpendicular.

The positive terminal 11 is arranged on one first side structural wall 1331, and the negative terminal 12 is arranged on the other first side structural wall 1331. With the arrangement, when the positive terminal 11 and the negative terminal 12 generate heat, a heat dissipation area of the first side structural wall 1331 is relatively large, which is conducive to rapid heat dissipation.

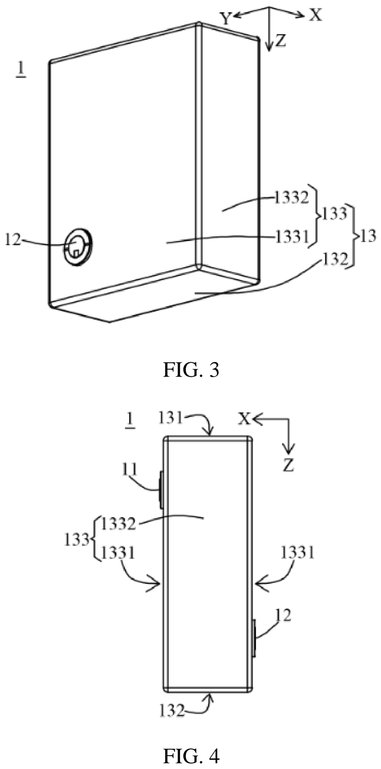

In some embodiments, referring to FIG. 4, in the same battery cell 1, a projection of the positive terminal 11 onto the first side structural wall 1331 along the first direction and a projection of the negative terminal 12 onto the first side structural wall 1331 along the first direction do not overlap. Referring to FIG. 20, in the same battery cell, a projection of the positive terminal onto the first side structural wall 1331 along the first direction has a first range TY1, a projection of the negative terminal onto the first side structural wall 1331 along the first direction has a second range TY2, and the first range TY1 and the second range TY2 do not overlap. Therefore, even if the positive terminal and the negative terminal generate heat, a relatively far distance between the positive terminal and the negative terminal, for example, the distance between the positive terminal and the negative terminal is greater than a width dimension of the battery cell in the first direction X, is conducive to rapid heat dissipation of the positive terminal and the negative terminal and relatively uniform distribution of heat inside the battery cell, thereby reducing a possibility of a thermal runaway problem occurring inside the battery cell.

Referring to FIG. 20, in the same battery cell, a projection of a line connecting the positive terminal and the negative terminal onto the first side structural wall 1331 along the first direction is a projection line J, and the projection line J may be a diagonal of the first side structural wall 1331, or a projection line J may be parallel to the diagonal of the first side structural wall 1331, or an angle between the projection line J and the diagonal of the first side structural wall 1331 may be in a range of 0° to 10°.

In some embodiments, in the same battery cell, the projection of the positive terminal onto the first side structural wall along the first direction and the projection of the negative terminal onto the first side structural wall along the first direction may alternatively overlap.

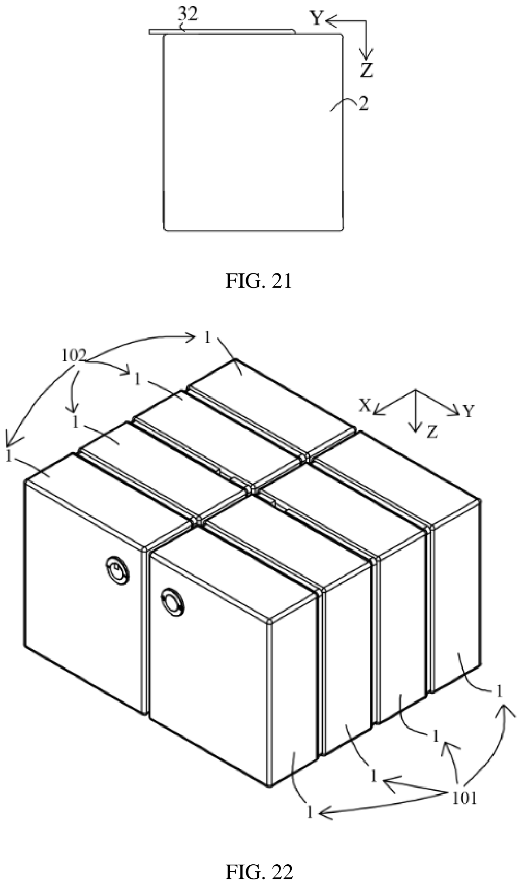

In some embodiments, referring to FIG. 21, a portion of the wiring harness 32 located outside the separator 2 may be attached to some edges around the separator 2.

In some embodiments, referring to FIG. 21, the portion of the wiring harness 32 located outside the separator 2 may be bonded to some edges around the separator 2.

In some embodiments, the top of the separator 2 may be lower than the top of the battery cell, and a portion of the wiring harness 32 located at the top of the separator 2 may still be located in the spacing between two battery cells, achieving an advantage of a more compact structure.

In some embodiments, the battery pack includes at least two columns of battery cells. As shown in FIG. 22, the battery pack may include a first column of battery cells 101 and a second column of battery cells 102, and the first column of battery cells 101 and the second column of battery cells 102 each include at least two battery cells 1 electrically connected in series. The first column of battery cells 101 and the second column of battery cells 102 may be electrically connected in series or electrically connected in parallel.

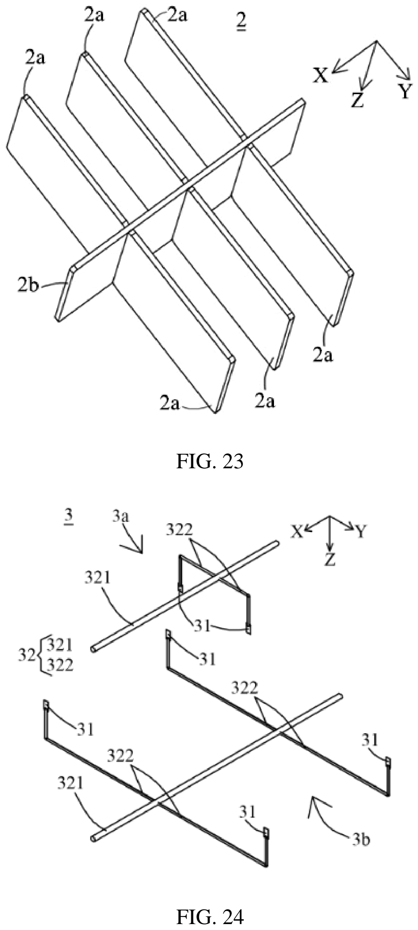

Referring to FIG. 23, the separator 2 may include a first separation portion 2a and a second separation portion 2b connected to each other. Two sides of the second separation portion 2b in the direction Y are both connected to at least two first separation portions 2a spaced apart in the direction X. The first separation portion 2a is configured to separate two adjacent battery cells in a same column of battery cells. The first separation portion 2a is provided with a through hole (not shown) for being penetrated by the electrical connection structure (including the positive terminal and the negative terminal). A setting position of the through hole in the first separation portion 2a is adapted to a position of a terminal (the positive terminal and the negative terminal) of the battery cell to be matched. One side of the second separation portion 2b is used to place the first column of battery cells, and the other side of the second separation portion 2b is used to place the second column of battery cells. That is, the second separation portion 2b is configured to separate the two columns of battery cells.

In some embodiments, a portion of the wiring harness located outside the separator 2 may be arranged at part of peripheral edges of the first separation portion 2a and part of peripheral edges of the second separation portion 2b. Alternatively, a portion of the wiring harness embedded into the separator 2 may be embedded into the first separation portion 2a and/or the second separation portion 2b. In other words, the separator 2 shown in FIG. 23 may serve as a mounting carrier for the wiring harness.

In some embodiments, the separator 2 may mainly include the first separation portion 2a in FIG. 23, and does not include the second separation portion 2b.

Referring to FIG. 24, the signal acquisition unit 3 may include a first group of signal acquisition units 3a and a second group of signal acquisition units 3b. The first group of signal acquisition units 3a may include a wiring harness 32. The wiring harness 32 may include a main wiring harness 321 and at least two branch wiring harnesses 322. The main wiring harness 321 is connected to the BMU. The branch wiring harnesses 322 serve as branches of the main wiring harness 321. Each branch wiring harness 322 is connected to the acquisition portion 31. Branch wiring harnesses 322 and the corresponding acquisition portions 31 may be provided on two sides of the main wiring harness 321 in the direction Y. Structural arrangement of the second group of signal acquisition units 3b is similar to that of the first group of signal acquisition units 3a. Details are not described herein again. The signal acquisition unit 3 shown in FIG. 24 may be configured to acquire signals of the two columns of battery cells shown in FIG. 22.

During use, if the same battery cell includes a positive terminal and a negative terminal that are staggered in the height direction (a direction parallel to the direction Z), that is, the positive terminal and the negative terminal of the same battery cell are not at a same height, the first group of signal acquisition units 3a shown in FIG. 24 may be configured to acquire signals of the terminals at the higher position, while the second group of signal acquisition units 3b shown in FIG. 24 may be configured to acquire signals of the terminals at the lower position.

According to the number of different battery cells, the number of the branch wiring harnesses 322 and the number of the acquisition portions 31 in FIG. 24 also differ.

The branch wiring harness 322 shown in FIG. 24 may be mounted to the first separation portion 2a in FIG. 23, the main wiring harness 321 shown in FIG. 24 may be mounted to the second separation portion 2b in FIG. 23, and specific mounting manners have been described above. Details are not described herein again.

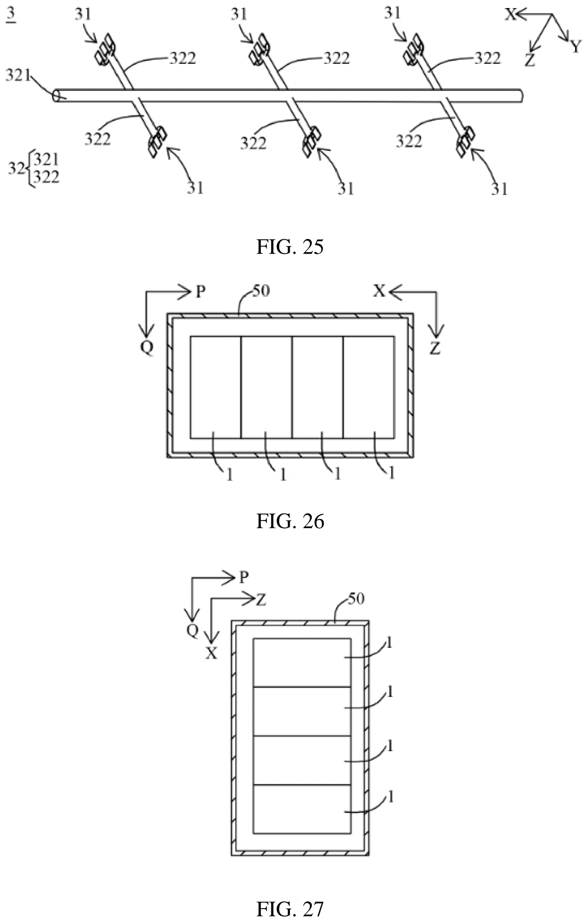

In some embodiments, referring to FIG. 25, the wiring harness 32 of the signal acquisition unit 3 may include a main wiring harness 321 and branch wiring harnesses 322 connected to each other. Each branch wiring harness 322 may be connected to the acquisition portion 31. The signal acquisition unit 3 shown in FIG. 25 may alternatively be configured to acquire signals of two columns of battery cells. During use, if the same battery cell includes a positive terminal and a negative terminal that are not staggered in the height direction (the direction parallel to the direction Z), that is, the positive terminal and the negative terminal of the same battery cell are at a same height, the signal acquisition unit 3 shown in FIG. 25 may be used.

In some embodiments, the battery cell may be a secondary battery (also referred to as a rechargeable battery or a storage battery), which refers to a battery that, after being discharged, can be recharged to activate active materials and continue to be used.

In some embodiments, the battery pack includes the battery cell, the separator, and the signal acquisition unit described above, and the battery pack may further include a battery pack box. The battery cell, the separator, and the signal acquisition unit are all located in the battery pack box. The battery pack may further include a BMU located in the battery pack box. The BMU is configured to monitor a voltage, a current, and a temperature of a battery module (including the plurality of electrically connected battery cells described above). The BMU is further configured to control the voltage and the current of the battery module. The BMU is further configured for self-diagnosis and fault recording. The battery pack may further include a frame assembly located in the battery pack box. The frame assembly is configured to fix the battery module.

In some embodiments, the electrical connection mainly refers to a connection relationship where two conductive structural members or substances can achieve a conductive function by physical contact.

In some embodiments, referring to FIG. 26, a plurality of battery cells 1 electrically connected in series included in a same column of battery cells may be arranged along a horizontal direction P (a length direction or a width direction) of a battery pack box 50. A height direction Z of the battery cell 1 is perpendicular to the horizontal direction P of the battery pack box 50. In other words, the height direction Z of the battery cell 1 is parallel to a height direction Q of the battery pack box 50. Alternatively, referring to FIG. 27, the plurality of battery cells 1 electrically connected in series included in the same column of battery cells may be arranged along the height direction Q of the battery pack box 50, and the height direction Z of the battery cell 1 is perpendicular to the height direction Q of the battery pack box 50. In other words, the height direction Z of the battery cell 1 is parallel to the horizontal direction P of the battery pack box 50.

In a second aspect, embodiments of the present disclosure provide an energy storage apparatus. The energy storage apparatus includes an inverter, a battery management system (BMS), and at least one battery pack as described above.

The inverter is configured to convert direct-current power into alternating-current power. The inverter has advantages of high conversion efficiency, fast startup, high safety, and the like, and can also have protection functions such as short-circuit, overload, overvoltage/undervoltage, and over-temperature. The BMS is configured to make the battery pack operate within a safe operating range, which may control charge and discharge power of the battery pack according to factors such as an ambient temperature, a battery state, and a power-consuming demand, to improve safety of the battery pack and make an operating state of the battery pack more reasonable, thereby helping to improve an endurance and a service life of the battery pack. As can be seen from the above, the battery pack may include a BMU. When the energy storage apparatus includes at least two battery packs, the BMS may be connected to at least two BMUs, so that the BMS can control at least two battery packs and the BMS can detect states of the at least two battery packs.

The energy storage apparatus may be, for example, an energy storage box (also known as a large energy storage device, applicable to technical fields such as large-scale industrial production and power distribution). The energy storage box includes an energy storage box body. The energy storage box body has an accommodating space. The inverter, the BMS, and the battery pack are all inside the energy storage box body.

The energy storage apparatus may be, for example, an energy storage cabinet (also known as an industrial and commercial energy storage device, applicable to small industrial and commercial power requirements). The energy storage cabinet includes an energy storage cabinet body. The energy storage cabinet body has an accommodating space. The inverter, the BMS, and the battery pack are all inside the energy storage cabinet body.

In a third aspect, embodiments of the present disclosure provide a power-consuming device. The power-consuming device may also be known as a power-consuming system. The power-consuming device may include the energy storage apparatus as described above. The power-consuming device may be an electric vehicle, a power grid, or a household appliance.

The above are merely preferred embodiments of the present disclosure and are not intended to limit the present disclosure. For those skilled in the art, the present disclosure may be subject to various modifications and variations. Any modifications, equivalent replacements, improvements, and the like made within the spirit and principles of the present disclosure should be included in the protection scope of the present disclosure.

## Claims

1. A battery pack, comprising:
at least two battery cells arranged along a first direction and electrically connected in series, wherein the at least two battery cells respectively comprise a positive terminal and a negative terminal arranged facing away from each other in the first direction, and in two serially-connected battery cells of the at least two battery cells, the positive terminal of one battery cell and the negative terminal of the other battery cell are electrically connected and facing each other;
a separator located between housings of the two serially-connected battery cells, wherein the separator is provided with a through hole, and an electrical connection structure comprising the positive terminal and the negative terminal that are electrically connected to each other passes through the through hole; and
a signal acquisition unit comprising an acquisition portion, wherein the acquisition portion is connected to the electrical connection structure.

2. The battery pack according to claim 1, wherein in the electrical connection structure, the positive terminal and the negative terminal are directly electrically connected to each other; and
at least part of the positive terminal is located in the through hole, and/or at least part of the negative terminal is located in the through hole.

3. The battery pack according to claim 2, wherein in the electrical connection structure, at least one of the positive terminal and the negative terminal is provided with an accommodating notch; and
the acquisition portion is located in the accommodating notch, and is clamped by the positive terminal and the negative terminal.

4. The battery pack according to claim 3, wherein the negative terminal is provided with the accommodating notch, and the accommodating notch is recessed from an end face of the negative terminal and extends to a side face of the negative terminal; or
the positive terminal is provided with the accommodating notch, and the accommodating notch is recessed from an end face of the positive terminal and extends to a side face of the positive terminal.

5. The battery pack according to claim 1, wherein the electrical connection structure further comprises a conductive intermediate member, and at least part of the conductive intermediate member is located in the through hole;
in the electrical connection structure, the positive terminal is indirectly electrically connected to the negative terminal through the conductive intermediate member; and
the signal acquisition unit comprises at least two acquisition portions, and the at least two acquisition portions are connected to the conductive intermediate member.

6. The battery pack according to claim 5, wherein the conductive intermediate member is further connected to the separator.

7. The battery pack according to claim 5, wherein in the electrical connection structure, the conductive intermediate member is located in the through hole, at least part of the positive terminal is located in the through hole, a projection of the positive terminal along the first direction onto a plane of the separator has a range α, a projection of the conductive intermediate member along the first direction onto the plane of the separator has a range γ, and the range α at least partially overlaps with the range γ; and/or
in the electrical connection structure, the conductive intermediate member is located in the through hole, at least part of the negative terminal is located in the through hole, a projection of the negative terminal along the first direction onto a plane of the separator has a range β, a projection of the conductive intermediate member along the first direction onto the plane of the separator has a range γ, and the range β at least partially overlaps with the range γ.

8. The battery pack according to any one of claims 1 to 7, wherein at least part of a structure of the acquisition portion extends into the through hole along a direction intersecting with the first direction.

9. The battery pack according to any one of claims 1 to 8, wherein the signal acquisition unit further comprises a wiring harness, and the wiring harness is connected to the acquisition portion; and
the separator is provided with a penetration notch, the penetration notch is in communication with the through hole, and the wiring harness extends from the through hole to outside of the separator through the penetration notch; or the separator is embedded with a wiring harness hole, the wiring harness hole is in communication with the through hole, and the wiring harness extends from the through hole to outside of the separator through the wiring harness hole; or a wiring harness groove is recessed in the separator, the wiring harness groove is in communication with the through hole, and the wiring harness extends from the through hole to outside of the separator through the wiring harness groove.

10. The battery pack according to any one of claims 1 to 9, wherein in a same battery cell, the battery cell comprises two first side structural walls arranged facing away from each other in the first direction and two second side structural walls arranged facing away from each other in a second direction, and the second direction intersects with the first direction;
either of the two first side structural walls has an area larger than either of the two second side structural walls; and
the positive terminal is arranged on one of the two first side structural walls, and the negative terminal is arranged on the other of the two first side structural walls.

11. The battery pack according to claim 10, wherein in a same battery cell, a projection range of the positive terminal onto a plane of one of the two first side structural walls along the first direction has a first range, a projection of the negative terminal onto the plane of the one first side structural wall along the first direction has a second range, and the first range does not overlap with the second range.

12. The battery pack according to any one of claims 1 to 11, wherein the at least two battery cells respectively further comprise a pressure relief valve, and in a same battery cell, the positive terminal, the negative terminal, and the pressure relief valve are located on different structural walls of the battery cell.

13. The battery pack according to any one of claims 1 to 12, wherein a material of the separator comprises an electrical insulating material and/or a thermal insulating material; and/or.
wherein the separator is provided with a flow channel for flow of coolant.

14. An energy storage apparatus, comprising the battery pack according to any one of claims 1 to 13.

15. A power-consuming device, comprising the energy storage apparatus according to claim 14.
